# EUROPEAN PATENT APPLICATION

(11) **EP 1 761 053 A2**
(43) Date of publication of application: **07.03.2007**
(21) Application number: 06291373.6
(22) Date of filing: 29.08.2006
(51) Int. Cl.: H04N 5/913

(54) **Data verification apparatus and data verification method**

(30) Priority: 30.08.2005 KR 20050080093
(71) Applicant: LG Electronics Inc., Youngdungpo-Gu Seoul (KR)
(72) Inventor: Heo, Jae Young 1009, Seonreung-Yeok, Gangnam-gu Seoul 135-280 (KR)
(74) Representative: Loisel, Bertrand

(57) **Abstract**

Disclosed herein is a data verification apparatus and method which can verify digital multimedia data to be transmitted and received. A receive data verification apparatus includes a decrypter for decrypting an encrypted High Definition Multimedia Interface (HDMI) stream and outputting the decrypted, resulting raw data in the form of an HDMI stream, and a receive data verifier for receiving the HDMI stream from the decrypter and performing HDMI reception algorithms to verify the received HDMI stream. After obtaining a High-bandwidth Digital Content Protection (HDCP)-decrypted stream, an HDMI module can be easily developed by performing various HDMI reception or transmission algorithms with respect to the obtained stream.

## Description

This application claims the priority benefit of Korean Application No. 10-2005-0080093, filed on August 30, 2005, which is hereby incorporated by reference as if fully set forth therein.

### BACKGROUND OF THE INVENTION

### Field of the Invention

The present invention relates to a data verification apparatus and a data verification method, and more particularly, to a data verification apparatus and method which can verify digital multimedia data to be transmitted and received.

### Discussion of the Related Art

Recently, with transmission and reception of signals via digital interfaces being enabled, digital display devices, such as liquid crystal display (LCD) panels, have become widespread.

A Digital Visual Interface (DVI), which is one of the digital interfaces, is a standard that, when being connected with a digital device, can transmit and receive digital signals to/from the digital device without converting them into analog signals.

In signal transmission using the DVI, pixel data and control data are transmitted as channel data in a Transition-Minimized Differential Signaling (TMDS) manner.

In signal reception and display using the DVI, pixel data and control data are acquired and displayed from TMDS data.

The DVI inputs a digital image directly without converting it into an analog image. In this regard, the use of the DVI enables the provision of a distortionless high-quality picture without analog signal losses, such as blurring due to sharpness loss, afterimage, poor gradation, and low legibility.

Also, the generalization of the DVI will reduce a serious deviation in output signal quality among respective graphic board makers, which is a problem in transmitting and receiving an analog signal.

A High Definition Multimedia Interface (HDMI) is a next-generation digital interface standard based on the aforementioned DVI technology, which can not only transmit audio data in addition to video data based on the DVI, but also perform content protection. This HDMI is adopted in High Definition (HD) multimedia products being currently introduced to the market.

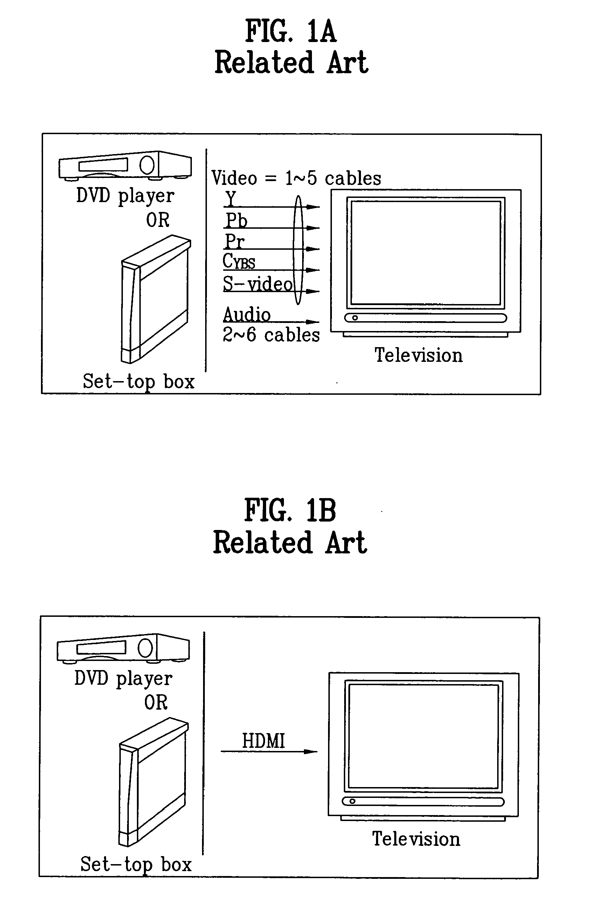

FIG. 1A shows a connection between a digital versatile disc (DVD) player and a television (TV) when the HDMI is not used, and FIG. 1B shows a connection between the DVD player and the TV when the HDMI is used.

As can be seen from FIG. 1A and FIG. 1B, the use of the HDMI enables the DVD player and the TV to be connected with each other via only one cable, not a plurality of cables. Signal transmission in the HDMI can be made in the TMDS manner as in the DVI.

The HDMI performs encryption for content protection, and generally uses High-bandwidth Digital Content Protection (HDCP) as an encryption scheme.

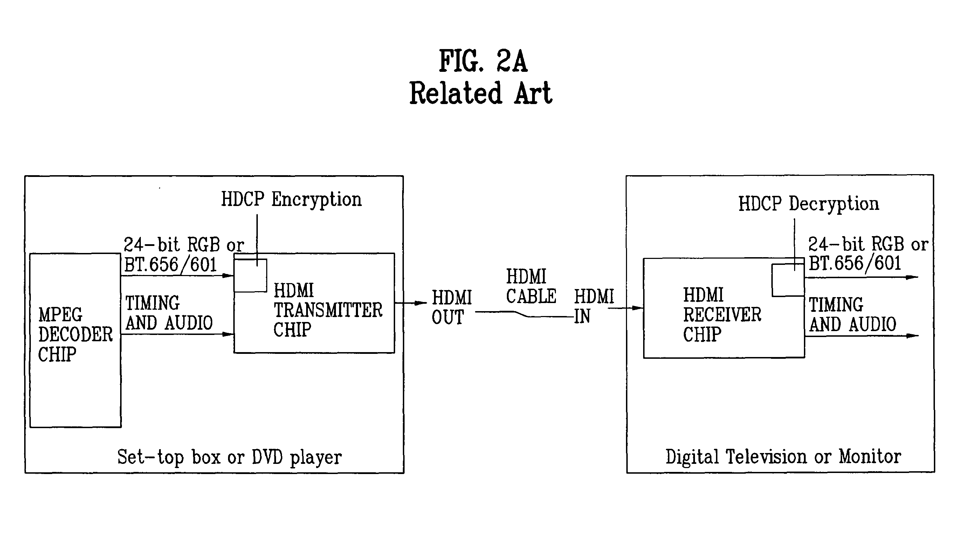

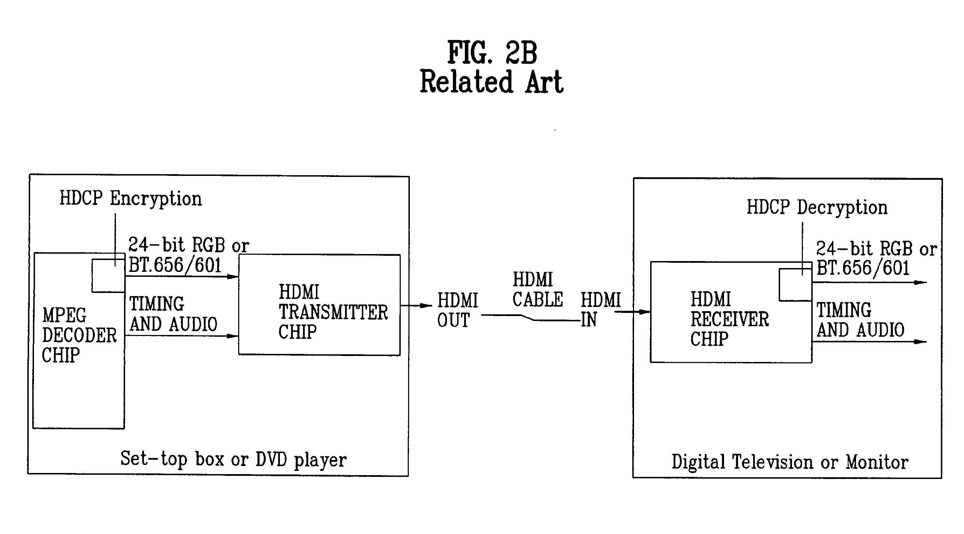

FIG. 2A and FIG. 2B are block diagrams showing examples of application of the HDCP encryption scheme to an HDMI stream. FIG. 2A shows an implementation of the HDCP encryption scheme in an HDMI transmitter chip, and FIG. 2B shows an implementation of the HDCP encryption scheme in a Moving Picture Experts Group (MPEG) decoder chip.

As can be seen from FIG. 2A and FIG. 2B, a stream outputted from the HDMI transmitter chip is an HDCP-encrypted TMDS stream. As a result, if there is no module capable of processing an HDCP-encrypted signal, it will be impossible to transmit and receive HDMI-format data.

In addition, in transmission and reception of HDMI-format data, provided that a verification cannot be made as to whether an HDCP-encrypted signal has been accurately processed, the HDMI-format data will be degraded in reliability even though being transmitted and received.

### SUMMARY OF THE INVENTION

Accordingly, the present invention is directed to a data verification apparatus and a data verification method that substantially obviate one or more problems due to limitations and disadvantages of the related art.

An object of the present invention is to provide a data verification apparatus and method which can verify HDMI-format data to be transmitted and received HDMI-format data in transmission and reception of the HDMI-format data.

Another object of the present invention is to provide a data verification apparatus and method which can perform transmission/reception algorithms for HDMI-format data and provide an environment for development of a transmitter/receiver module for the HDMI-format data.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a receive data verification apparatus comprises: a decrypter for decrypting an encrypted High Definition Multimedia Interface (HDMI) stream and outputting the decrypted, resulting raw data in the form of an HDMI stream; and a receive data verifier for receiving the HDMI stream from the decrypter and performing HDMI reception algorithms to verify the received HDMI stream.

Preferably, the decrypter comprises: an HDMI receiver module for receiving and decrypting the encrypted HDMI stream; and an HDMI transmitter module for receiving and outputting the decrypted HDMI stream from the HDMI receiver module.

The decrypted raw data may be multimedia data including video data for three video channels and audio data.

The encrypted HDMI stream may be a stream encrypted in a High-bandwidth Digital Content Protection (HDCP) encryption scheme.

Preferably, the receive data verifier comprises: a Digital Visual Interface (DVI) receiver module for receiving the HDMI stream from the decrypter; a reception algorithm processor for receiving data from the DVI receiver module and performing the reception algorithms with respect to the received data to verify and output it; and a DVI transmitter module for encoding and outputting the output data from the reception algorithm processor in a Transition-Minimized Differential Signaling (TMDS) manner.

The reception algorithm processor may be implemented with a Field-Programmable Gate Array (FPGA) chip.

The data received by the reception algorithm processor may be multimedia data including video data and audio data.

In another aspect of the present invention, a transmit data verification apparatus comprises: a decrypter for decrypting and outputting an encrypted HDMI stream; and a transmit data verifier for performing HDMI transmission algorithms with respect to raw data outputted from the decrypter.

The raw data outputted from the decrypter may be multimedia data including video data for three video channels and audio data.

The encrypted HDMI stream may be a stream encrypted in an HDCP encryption scheme.

Preferably, the transmit data verifier comprises: a transmission algorithm processor for converting the raw data outputted from the decrypter into an HDMI stream and performing the HDMI transmission algorithms with respect to the converted HDMI stream to verify and output it; and a DVI transmitter module for encoding and outputting the HDMI stream from the transmission algorithm processor in a TMDS manner.

The transmission algorithm processor may be implemented with an FPGA chip.

In another aspect of the present invention, a receive data verification method comprises: receiving and decrypting an encrypted HDMI stream; outputting the decrypted, resulting raw data in the form of an HDMI stream; receiving the outputted HDMI stream and performing reception algorithms with respect to the received HDMI stream to verify HDMI reception performance; and encoding and outputting the verified HDMI stream in a TMDS manner.

In yet another aspect of the present invention, a transmit data verification method comprises: receiving and decrypting an encrypted HDMI stream; converting the decrypted, resulting raw data into an HDMI stream and performing transmission algorithms to verify the converted HDMI stream; and encoding and outputting the verified HDMI stream in a TMDS manner.

The encrypted HDMI stream may be a stream encrypted in an HDCP encryption scheme.

The decrypted HDMI stream may be multimedia data including video data for three video channels and audio data.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1A is a schematic diagram showing a connection between a DVD player and a TV when an HDMI is not used;

FIG. 1B is a schematic diagram showing a connection between the DVD player and the TV when the HDMI is used;

FIG. 2A is a block diagram showing an example of implementation of an HDCP encryption scheme in an HDMI transmitter chip;

FIG. 2B is a block diagram showing an example of implementation of the HDCP encryption scheme in an MPEG decoder chip;

FIG. 3 is a block diagram of a data verification apparatus which performs reception algorithms for HDMI data, according to an embodiment of the present invention;

FIG. 4 is a block diagram of a data verification apparatus which performs transmission algorithms for HDMI data, according to an embodiment of the present invention;

FIG. 5 is a flow chart illustrating a receive data verification method according to an embodiment of the present invention; and

FIG. 6 is a flow chart illustrating a transmit data verification method according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

For the convenience of description, data or stream capable of being transferred through an HDMI will hereinafter be referred to as HDMI data or HDMI stream.

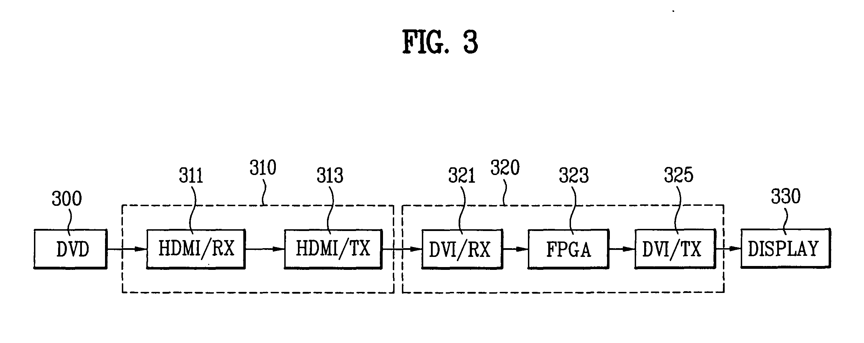

FIG. 3 is a block diagram of a data verification apparatus which performs reception algorithms for HDMI data, according to an embodiment of the present invention.

With reference to FIG. 3, a detailed description will hereinafter be given of the embodiment of the data verification apparatus which performs the reception algorithms for the HDMI data, according to the present invention.

The embodiment of FIG. 3 comprises a digital versatile disc (DVD) player 300, decrypter 310, receive data verifier 320, and display unit 330.

The decrypter 310 receives an HDCP-encrypted HDMI stream from the DVD player 300, HDCP-decrypts the received HDMI stream, and outputs the HDCP-decrypted HDMI stream. The HDMI stream outputted from the DVD player 300 is an HDCP-encrypted stream, which cannot be used for verification of HDMI receive data without a verified HDCP decryption module.

Accordingly, for verification of HDMI receive data, the decrypter 310 HDCP-decrypts and outputs the received HDMI stream.

To this end, the decrypter 310 includes an HDMI receiver module 311, and an HDMI transmitter module 313.

The HDMI receiver module 311 receives and decrypts the HDCP-encrypted HDMI stream from the DVD player 300. The decrypted raw digital signal is multimedia data including 24-bit video data for three channels, namely, 8-bit video data for each channel, and audio data.

The HDMI transmitter module 313 outputs the decrypted multimedia data in the form of an HDMI stream.

It should be noted here that the HDMI receiver module 311 and HDMI transmitter module 313 can process data of HDMI version 1.1 or above. In other words, because HDMI version 1.0 data cannot be HDCP-decrypted, data of HDMI version 1.1 or above must be used for the HDCP decryption.

The receive data verifier 320 performs various reception algorithms capable of verifying signal quality, display conditions, etc. in screen display using the HDMI stream received from the decrypter 310, and then outputs the resulting HDMI stream to the display unit 330.

To this end, the receive data verifier 320 includes a Digital Visual Interface (DVI) receiver module 321, reception algorithm processor 323, and DVI transmitter module 325.

The DVI receiver module 321 receives the decrypted HDMI stream from the HDMI transmitter module 313 and outputs an audio data-embedded 24-bit video data stream.

The reception algorithm processor 323 receives the 24-bit video data stream and performs various HDMI reception algorithms with respect to the received data stream. The use of the reception algorithm processor 323 enables reception and display environments of an HDMI stream to be tested and HDMI-associated modules to be developed.

Preferably, the reception algorithm processor 323 is implemented with a Field-Programmable Gate Array (FPGA) chip.

The FPGA chip refers to a prototype integrated circuit (IC) that is made for final verification of operation and performance of pre-designed hardware just before producing the hardware in the form of a semiconductor device.

The FPGA chip comes within the category of general-purpose ICs in view of the semiconductor manufacturer because it is mass-produced and used for general purposes, and within the category of Application Specific Integrated Circuits (ASICs) in view of the user because it can be programmed and used according to the user's request.

Consequently, the receive data verifier 320 may be an HDMI module which is incorporated in an HDMI receiver installable in a digital TV, monitor, or the like. The HDMI receiver developer may implement and execute various HDMI reception algorithms in the reception algorithm processor 323.

Multimedia data outputted from the reception algorithm processor 323 includes 24-bit video data of three channels and audio data.

The DVI transmitter module 325 encodes the output data from the reception algorithm processor 323 in a TMDS manner and outputs the encoded data to the display unit 330.

The results of the algorithm processing can be confirmed through the display unit 330.

The display unit 330 may be a display unit of a digital television (DTV) or a monitor.

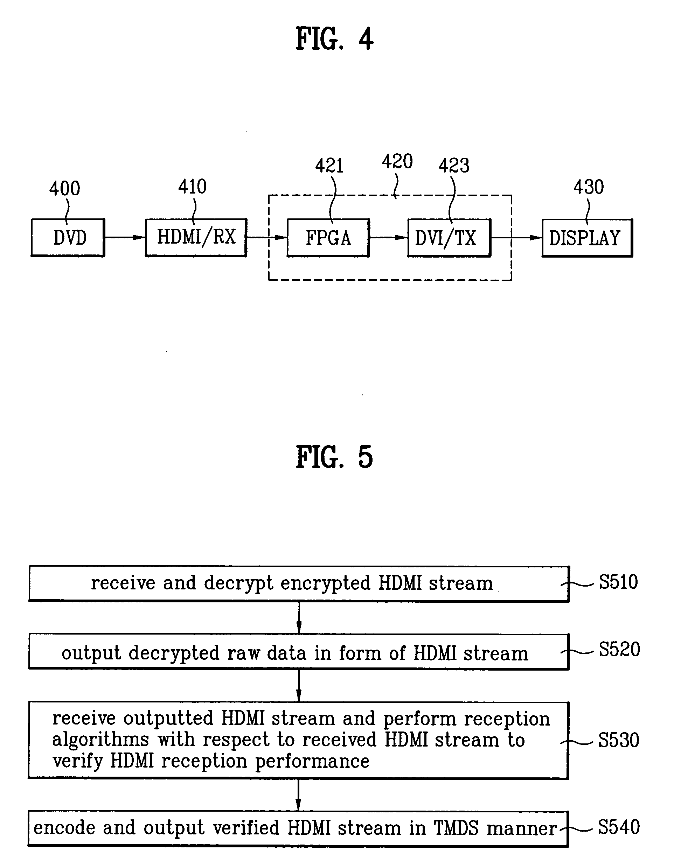

FIG. 4 is a block diagram of a data verification apparatus which performs transmission algorithms for HDMI data, according to an embodiment of the present invention.

With reference to FIG. 4, a detailed description will hereinafter be given of the embodiment of the data verification apparatus which performs the transmission algorithms for the HDMI data, according to the present invention.

The embodiment of FIG. 4 comprises a digital versatile disc (DVD) player 400, decrypter 410, transmit data verifier 420, and display unit 430.

The decrypter 410 receives an HDCP-encrypted HDMI stream from the DVD player 400, HDCP-decrypts the received HDMI stream, and outputs the HDCP-decrypted HDMI stream. The decrypter 410 includes an HDMI receiver module for receiving and decrypting the HDCP-encrypted HDMI stream.

The transmit data verifier 420 includes a transmission algorithm processor 421, and a DVI transmitter module 423.

The transmission algorithm processor 421 extracts video data, audio data and control data from a decrypted raw digital signal and converts the extracted data into HDMI-format data. To this end, the transmission algorithm processor 421 performs HDMI transmission algorithms with respect to the decrypted raw digital signal, and verifies or tests and outputs HDMI-format data to be transmitted.

Preferably, the transmission algorithm processor 421 is implemented with an FPGA chip. The use of the transmission algorithm processor 421 enables transmission environments of an HDMI stream, to be transmitted, to be tested and HDMI-associated modules to be developed.

The DVI transmitter module 423 encodes the HDMI stream verified by the transmission algorithm processor 421 in the TMDS manner and outputs the resulting data to the display unit 430. As a result, the results of the HDMI transmission algorithm processing can be confirmed or verified through the display unit 430.

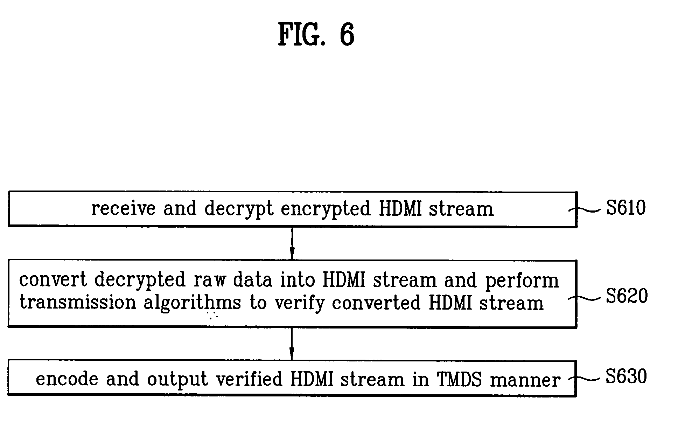

FIG. 5 is a flow chart illustrating a receive data verification method according to an embodiment of the present invention.

With reference to FIG. 5, a detailed description will hereinafter be given of the embodiment of the receive data verification method according to the present invention.

First, an encrypted HDMI stream is received and decrypted (S510).

The decrypted raw data is outputted in the form of an HDMI stream (S520).

Preferably, the decrypted raw data is multimedia data including video data for three video channels and audio data.

The outputted HDMI stream is received and reception algorithms are performed therefor to verify HDMI reception performance (S530).

The verified HDMI stream is encoded and outputted in the TMDS manner (S540). The verification results of the reception algorithms can be confirmed from the outputted results.

Details of the HDCP encryption and decryption, HDMI stream, and HDMI reception algorithms are the same as those described in the embodiment of FIG. 3.

FIG. 6 is a flow chart illustrating a transmit data verification method according to an embodiment of the present invention.

With reference to FIG. 6, a detailed description will hereinafter be given of the embodiment of the transmit data verification method according to the present invention.

First, an encrypted HDMI stream is received and decrypted (S610).

The decrypted raw data is converted into an HDMI stream and transmission algorithms are performed to verify the converted HDMI stream (S620).

The verified HDMI stream is encoded and outputted in the TMDS manner (S630). The verification results of the transmission algorithms can be confirmed from the outputted results.

Details of the HDCP encryption and decryption, HDMI stream, and HDMI transmission algorithms are the same as those described in the embodiment of FIG. 4.

As apparent from the above description, the data verification apparatus and data verification method according to the present invention have effects as follows. Firstly, an HDCP-decrypted stream can be obtained by using an input/output (I/O) board equipped with a Field-Programmable Gate Array (FPGA) and a pre-developed HDMI chip. Secondly, after obtaining the HDCP-decrypted stream, an HDMI module can be easily developed by performing various HDMI reception or transmission algorithms with respect to the obtained stream.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A receive data verification apparatus comprising:
a decrypter for decrypting an encrypted High Definition Multimedia Interface (HDMI) stream and outputting the decrypted, resulting raw data in the form of an HDMI stream; and
a receive data verifier for receiving the HDMI stream from the decrypter and performing HDMI reception algorithms to verify the received HDMI stream.

2. The receive data verification apparatus according to claim 1, wherein the decrypter comprises:
an HDMI receiver module for receiving and decrypting the encrypted HDMI stream; and
an HDMI transmitter module for receiving and outputting the decrypted HDMI stream from the HDMI receiver module.

3. The receive data verification apparatus according to claim 2, wherein the decrypted raw data is multimedia data including video data for three video channels and audio data.

4. The receive data verification apparatus according to claim 1, wherein the encrypted HDMI stream is a stream encrypted in a High-bandwidth Digital Content Protection (HDCP) encryption scheme.

5. The receive data verification apparatus according to claim 1, wherein the receive data verifier comprises:
a Digital Visual Interface (DVI) receiver module for receiving the HDMI stream from the decrypter;
a reception algorithm processor for receiving data from the DVI receiver module and performing the reception algorithms with respect to the received data to verify and output it; and
a DVI transmitter module for encoding and outputting the output data from the reception algorithm processor in a Transition-Minimized Differential Signaling (TMDS) manner.

6. The receive data verification apparatus according to claim 5, wherein the reception algorithm processor is implemented with a Field-Programmable Gate Array (FPGA) chip.

7. The receive data verification apparatus according to claim 5, wherein the data received by the reception algorithm processor is multimedia data including video data and audio data.

8. A transmit data verification apparatus comprising:
a decrypter for decrypting and outputting an encrypted HDMI stream; and
a transmit data verifier for performing HDMI transmission algorithms with respect to raw data outputted from the decrypter.

9. The transmit data verification apparatus according to claim 8, wherein the raw data outputted from the decrypter is multimedia data including video data for three video channels and audio data.

10. The transmit data verification apparatus according to claim 8, wherein the encrypted HDMI stream is a stream encrypted in an HDCP encryption scheme.

11. The transmit data verification apparatus according to claim 8, wherein the transmit data verifier comprises:
a transmission algorithm processor for converting the raw data outputted from the decrypter into an HDMI stream and performing the HDMI transmission algorithms with respect to the converted HDMI stream to verify and output it; and
a DVI transmitter module for encoding and outputting the HDMI stream from the transmission algorithm processor in a TMDS manner.

12. The transmit data verification apparatus according to claim 11, wherein the transmission algorithm processor is implemented with an FPGA chip.

13. A receive data verification method comprising:
receiving and decrypting an encrypted HDMI stream;
outputting the decrypted, resulting raw data in the form of an HDMI stream;
receiving the outputted HDMI stream and performing reception algorithms with respect to the received HDMI stream to verify HDMI reception performance; and
encoding and outputting the verified HDMI stream in a TMDS manner.

14. The receive data verification method according to claim 13, wherein the encrypted HDMI stream is a stream encrypted in an HDCP encryption scheme.

15. The receive data verification method according to claim 13, wherein the decrypted raw data is multimedia data including video data for three video channels and audio data.

16. A transmit data verification method comprising:
receiving and decrypting an encrypted HDMI stream;
converting the decrypted, resulting raw data into an HDMI stream and performing transmission algorithms to verify the converted HDMI stream; and
encoding and outputting the verified HDMI stream in a TMDS manner.

17. The transmit data verification method according to claim 16, wherein the encrypted HDMI stream is a stream encrypted in an HDCP encryption scheme.

18. The transmit data verification method according to claim 16, wherein the decrypted raw data is multimedia data including video data for three video channels and audio data.
